# EUROPEAN PATENT SPECIFICATION

(11) **EP 2 277 023 B1**
(45) Date of publication and mention of the grant of the patent: **11.07.2018**
(21) Application number: 08754406.0
(22) Date of filing: 14.05.2008
(51) Int. Cl.: G01N 1/02

(54) **TRACE PARTICLE COLLECTION SYSTEM**
SPURENPARTIKELSAMMELSYSTEM
SYSTÈME DE COLLECTE DE PARTICULES DE TRACE

(43) Date of publication of application: 26.01.2011
(73) Proprietor: Implant Sciences Corporation, Wilmington, MA 01887 (US)
(72) Inventor: BUNKER, Stephen, N., Los Osos CA 93402 (US)
(74) Representative: Westphal, Mussgnug & Partner Patentanwälte mbB
(86) International application number: PCT/US2008/006102
(87) International publication number: WO 2009/139744

(56) References cited:
- EP-A- 0 896 213
- WO-A-00/16064
- DE-A1- 10 161 784
- US-A- 5 931 721
- US-A1- 2007 158 447
- US-A1- 2007 215 725
- US-B1- 6 978 657

## Description

### Background of the Invention

### 1. Field of the Invention

This invention relates to detection of trace chemicals, and more particularly to collection of particles of substances from a surface in order to provide the release, transport, and capture of the particles.

### 2. Description of Related Art

There exist a wide variety of chemical analysis instruments that are capable of detecting and identifying target particles of trace chemicals ("target chemicals") once the sample of particles is transported to the instrument and subsequently vaporized. Examples include, but are not limited to, ion mobility spectrometers, mass spectrometers, gas chromatographs, surface acoustic wave sensors, cantilever beam sensors, and electron capture detectors. Similarly, there are several ways that may be utilized to transport the target particles to the instrument, some of which are incorporated within the instrument and some which may require an operator to perform the transfer. Examples include, but are not limited to, mechanically transporting a collected sample to the instrument, vacuum collection of vapor or particles, and vortex vacuum sampling.

The target particles begin by being attached to a surface by weak chemical bonds, van der Waals forces, mechanical attachment in a fibrous structure or porosity, adhesive forces, electrostatic attraction, or entrainment in a sticky material, such as grease. For some target chemicals, such as narcotics and explosives, the surface adhesion forces can be relatively strong, making the target particles difficult to remove by simple, low momentum transfer methods, such as blowing a puff of air. Removal of such strongly adhered target particles by blowing air is usually successful only for the largest and heaviest target particles that present the greatest surface area to the blowing air. In general, blowing air does not readily remove target particles of explosives or narcotics from rigid surfaces; only from flexible surfaces, such as cloth, where the fluttering motion of the material and the high porosity provides the means to mechanically dislodge the target particles. Even with cloth, the blowing air stream usually requires a very high velocity flow to have any effect and then only for the largest target particles, so the process is very inefficient.

In some cases, the process of taking a sample begins with an operator or a machine physically wiping an absorbent, often textured substance, such as chemical filter paper, onto the surface to be tested (the "target surface"). Target particles of the chemical of interest may then be transferred and concentrated on, or in, the surface texture of the absorber by the mechanical action of the wiping. This intermediate absorber is then brought to the vicinity of the detection instrument to make a measurement. The wiping method generally works reliably and efficiently but can be costly, because the media usually has to be replaced often, and a trained operator is often required. In addition, operators become tired and fail to wipe in exactly the same way each time.

There are many applications in which it may be desirable to avoid having to manually wipe a surface. These include, for example, sampling without an operator, large area sampling, remote sampling, robotic sampling, surfaces where physical contact is unacceptable, and situations in which the frequent replacement of wiping materials is not acceptable, possibly due to high cost. In these cases a better method of dislodging target particles from the surface than simply blowing air may be desirable.

A non-contact apparatus for cleaning a silicon semiconductor wafer is known. See for example, U.S. 5,931,721 by Rose et al., "Aerosol Surface Processing". Aerosols of liquids or solids are used to abrade contamination particles and films from a silicon wafer surface without damaging the semiconductor devices previously constructed on the wafer. This apparatus is for cleaning a wafer, and no effort is made to capture the resultant particles for chemical analysis. In addition, other cleansing features, such as rinsing the wafer, are required in addition to the aerosol surface processing.

US 2007/0215725 A discloses a device with concentric/coaxial positioned nozzles/channels to provide parallel jets that provides for particle release at an increased distance.

US 6 978 657 B1 discloses a portable chemical detection system that utilizes a metal fiber substrate that may be placed in a holder in a collection module. The system can shoot a jet of gas at a subject to dislodge residue, and can draw air containing the residue through a tube into the substrate. To help an operator to properly position the tube in low light situations, a laser pointing device may be affixed to the tube.

### Summary of the Invention

In accordance with one aspect of the system described herein is an apparatus for dislodging and collecting target particles from a target surface as defined in claim 1. The apparatus includes a reservoir of pressurized liquid carbon dioxide ("CO₂") for an aerosol, at least one pulsed valve, at least one liquid carbon dioxide expansion chamber, at least two nozzles for directing the aerosol mixture at a target surface that are in communication with the source of pressurized liquid carbon dioxide, the at least one pulsed valve, and the at least one expansion chamber, a vacuum providing a suction flow into an orifice that entrains frozen carbon dioxide ("dry ice") particles from the aerosol mixture and target chemical particles dislodged by an impact of the dry ice particles from the aerosol mixture, and a collecting medium for accumulating the particles entrained in the suction flow. The expansion chamber may include a chamber with solid walls immediately downstream of said pulsed valve. The suction flow into an orifice may be surrounded circumferentially by a spinning vortex flow. The collecting medium may include at least one of a filter, chemically coated adsorbing surface, metal mesh, three dimensional woven metal, metal wire, metal foil, metal and electrical insulator laminate, or a resistive coating on a substrate. The collecting medium may be an electrode of an electric field disposed substantially perpendicular to the direction of gas flow through said collecting medium. The collecting medium may be disposed upstream of said orifice. The collecting medium may be disposed within said orifice. The reservoir may be a pressurized tank of liquefied carbon dioxide. When the reservoir is a pressurized tank of liquefied carbon dioxide, solid particles for an aerosol mixture may be formed by the freezing action during the free expansion of said liquefied gas in an expansion chamber in which a first portion of the liquid is vaporized by absorbing energy and a second portion of the liquid is frozen into particles by releasing energy. The aerosol mixture may be delivered in pulses at predetermined time intervals, and the aerosol particles may be delivered in accordance with delivery of the pressurized CO₂ gas that accompanies the formation of the dry ice aerosol particles in the expansion chamber.

In accordance with another aspect of the system described herein, not being part of the present invention, is a method for dislodging and collecting target particles from a target surface. An aerosol mixture including frozen carbon dioxide aerosol particles dispersed in a pressurized gas is provided. The aerosol mixture is directed at the target surface including the target particles. The aerosol particles impact the target particles causing removal of the target particles from the target surface and causing the target particles to be included in a flow of the pressurized gas with the aerosol particles. Also provided is a suction flow into which the flow of the target particles, the aerosol particles, and the pressurized gas are directed. The particles entrained in the suction flow are collected on a filter substrate. The method may also include delivering the pressurized gas and aerosol mixture in timed pulses, and delivering the aerosol particles in accordance with the timed pulses. The method may also include combining the pressurized gas with the aerosol particles to form the aerosol mixture. The suction flow may be created utilizing a vacuum suction flow into an orifice. The vacuum suction flow into an orifice may be bounded circumferentially by a spinning vortex. The pressurized gas and aerosol mixture may be delivered at a timed pulse between 0.01 seconds and 1 second.

An aerosol generator may be interfaced to other components of a system used in conjunction with a trace chemical detector. The use of an aerosol mixture to remove target particles may be accomplished without the operator or a wipe contacting the target surface.

An embodiment of a particle removal system may include a particle removal component, a particle transport component, and a particle collection component. The particle removal component may include an aerosol generator that is provided with a source of pressurized gas to blow the frozen carbon dioxide aerosol particles towards a target surface that may be contaminated with traces of particles of target chemicals. The source of pressurized gas may be operated pulsed. A typical pulse may be between 0.01 seconds and 1 second. A plurality of at least two nozzles may be provided for guiding the aerosol mixture towards a focal point a short distance beyond the target surface such that this point is the object of the particle transport component of the particle removal system.

The frozen carbon dioxide aerosol particles may be solid but not liquid. The frozen carbon dioxide particles may sublime at ambient temperature. The sublimation of the frozen carbon dioxide aerosol particles ensures that they will disappear from the particle collection component as well as the surrounding environment soon after the pulse.

The aerosol generator may generate the particles for the aerosol by the free expansion of liquefied carbon dioxide into atmospheric pressure, which produces frozen carbon dioxide particles. Said frozen particles may be further entrained and mixed with the simultaneously produced carbon dioxide gas or optionally combined with a second flow from a separate source of pressurized gas used as an accelerant.

The frozen carbon dioxide aerosol particle material may be selected to provide no significant damage to the target surface. Aerosol particles with a high hardness, such as silica or alumina, are abrasive and may damage the target surface as a result of the high velocity impact. Carbon dioxide is an oxide and has no flashpoint, which may be noted as an important characteristic when working with finely divided materials.

The frozen carbon dioxide aerosol mixture may be non-toxic and harmless to humans and animals, as long as the aerosol is not directed into the eyes. The frozen carbon dioxide aerosol mixture may be pulsed to avoid excessive emissions into a confined space, since the carbon dioxide gas residue may displace the oxygen in air.

The frozen carbon dioxide aerosol particles may impact the target particles on the target surface and provide sufficient momentum transfer to dislodge the target particles from the target surface and become entrained in a puff of gas transporting the aerosol particles. The dislodged target particles and aerosol particles may then be collected by the particle transport component. The frozen carbon dioxide aerosol mixture may release target particles by at least one of: physical impact between the aerosol particle and the target particle, sudden sublimation producing a local pulse of gas when the aerosol particle contacts a surface at room temperature, the pulse of pressurized gas accompanying the aerosol mixture, and cooling the target particle such that its adhesion properties are changed.

The particle transport component may be typically either a simple vacuum suction flow into an orifice or a vacuum suction flow into an orifice that is bounded circumferentially by a spinning vortex. The aerosol particles and dislodged target particles may be swept into the vacuum suction flow and may then be transported to a particle collecting medium associated with the particle removal system.

The particle collection component may be any of a variety of particle filters commonly utilized in connection with particle collecting techniques. Examples include, but are not limited to, a mesh filter, a woven three dimensional mesh, a filter made of commonly utilized filter materials, an absorbent surface that may be chemically coated to enhance adhesion, a vortex particle separator, an electrostatic particle collector, and an engineered material with finely etched openings to pass air but retain particles.

According to the system described herein, an apparatus for dislodging and collecting target particles from a target surface includes a reservoir of liquefied and pressurized carbon dioxide, at least one pulsed valve in communication with said reservoir, at least one expansion chamber in communication with said at least one pulsed valve for forming an aerosol mixture of frozen carbon dioxide particles and carbon dioxide gas, at least two nozzles in communication with said at least one expansion chamber for directing a spray of said aerosol mixture to substantially overlap at a single focal point downstream of said at least two nozzles, a vacuum providing a suction flow into an orifice that entrains particles from said aerosol mixture and target particles dislodged by an impact of said particles from said aerosol mixture, and a collecting medium for accumulating said particles entrained in said suction flow. The suction flow into an orifice may be surrounded circumferentially by a spinning vortex flow. The expansion chamber may include an entrance orifice that has a smaller cross section than the exit orifice. The collecting medium may include at least a filter, chemically coated adsorbing surface, metal mesh, three dimensional woven metal, metal wire, metal foil, metal and electrical insulator laminate, and/or a resistive coating on a substrate. The collecting medium may be disposed upstream of said orifice. The collecting medium may be disposed within said orifice. The reservoir may be a pressurized container of liquefied carbon dioxide gas. The pressurized liquefied carbon dioxide may form an aerosol mixture when it is converted in part to solid particles of frozen carbon dioxide and in part to carbon dioxide gas upon expansion into atmospheric pressure in the expansion chamber. The aerosol mixture may be delivered in pulses at predetermined time intervals, and said aerosol particles may be delivered in accordance with delivery of said pressurized gas. The valve may provide pulses of liquid carbon dioxide greater than 10 milliseconds and less than 1 second in duration. The vacuum may be provided by the impeller of a vortex attractor. The apparatus may also include a second supply of pressurized gas to assist the transport of said aerosol mixture. The second supply of pressurized gas may be delivered by addition into the expansion chamber or coaxially with and in the direction of the flow from the nozzle for said aerosol mixture. The second supply of pressurized gas may be air, nitrogen, argon, and/or carbon dioxide. The apparatus may also include means to assist the operator to position the apparatus at an optimal distance from the target surface. The means to position the apparatus may be ultrasonic distance measuring, at least two solid state laser pointers, and/or optical reflection sensor. The apparatus may also include means to determine if the flow of carbon dioxide liquid is sufficient for collecting target particles. The means to determine liquid flow may be temperature sensor mounted on a nozzle, optical reflection sensor viewing the reflectivity of the aerosol mixture, optical transmission sensor viewing the opacity of the aerosol mixture, and/or ultrasonic sensor to sense the density of the carbon dioxide liquid or gas.

According further to the system described herein, dislodging and collecting target particles from a target surface includes providing a frozen carbon dioxide aerosol mixture including aerosol particles dispersed in a pressurized gas, directing said aerosol mixture at said target surface including said target particles, said aerosol particles impacting said target particles causing removal of said target particles from said target surface and causing said target particles to be included in a flow of said pressurized gas with said aerosol particles, providing a suction flow into which said flow of said target particles, said aerosol particles, and said pressurized gas are directed, and collecting said particles entrained in said suction flow. Dislodging and collecting target particles from a target surface may also include delivering said pressurized gas in timed pulses and delivering said aerosol particles in accordance with said timed pulses. Dislodging and collecting target particles from a target surface may also include combining said pressurized gas with said aerosol particles to form said aerosol mixture. The suction flow may be created utilizing a vacuum suction flow into an orifice. The vacuum suction flow into an orifice may be bounded circumferentially by a spinning vortex.

### Brief Description of the Drawing

The system is described herein with reference to the several figures of the drawing, in which,
Fig. **1** is an example of an embodiment of an air jet trace particle removal system from the prior art.
Fig. **2** is an example of an embodiment of a frozen carbon dioxide trace particle removal system that may be used in connection with the methods disclosed herein.
Fig. **3** is an example of a second embodiment of a frozen carbon dioxide trace particle removal system that may be used in connection with the system described herein.
Fig. **4** is an example of a third embodiment of a frozen carbon dioxide trace particle removal system that may be used in connection with the system described herein.

### Detailed Description

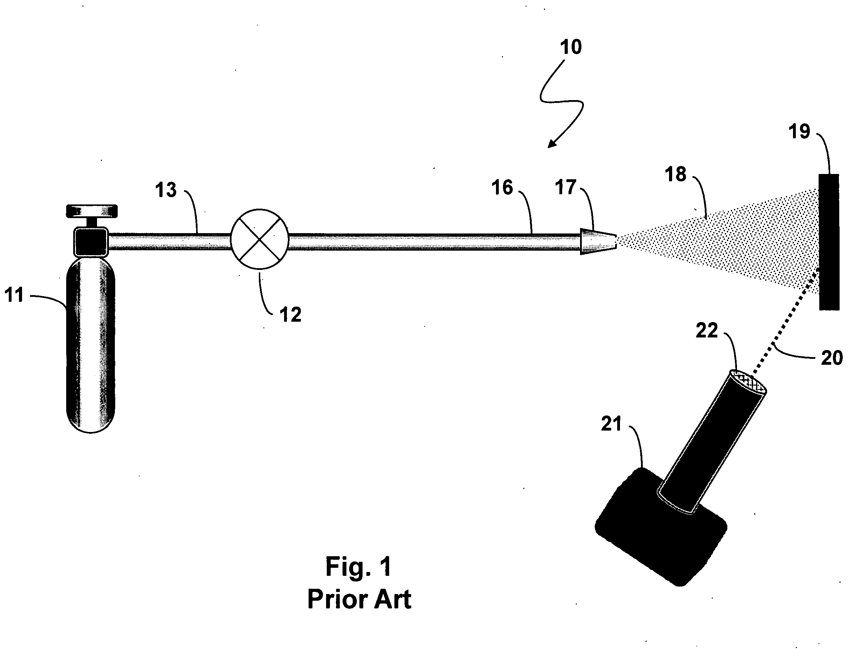

Referring now to Figure **1****,** shown is an example of an embodiment of an air jet trace particle removal system **10** from the prior art. The air jet system **10** includes a source of pressurized gas **11,** a control valve **12,** communication tubing **13,** and a tube **16** in communication with an exit nozzle **17.** The pressurized gas is output from nozzle **17** in an area **18.** The air jet **10** is directed by the nozzle **17** towards a target surface **19,** where the air blows particles **20** off of the target surface **19,** thus removing the sticky particles. Particle transport is produced by suction pump **21,** whose inward flow entrains both ambient air and target particles **20.** The target particles **20** are collected on a filter medium **22.** When the sample has been collected, the filter medium **22** is transported to the entrance orifice of a trace chemical detector. This embodiment of the prior art is deficient in that the blowing air **18** is inefficient for removing particles from most types of target surfaces **19,** and the suction pump **21** provides inefficient particle transport beyond a short distance from its entrance orifice.

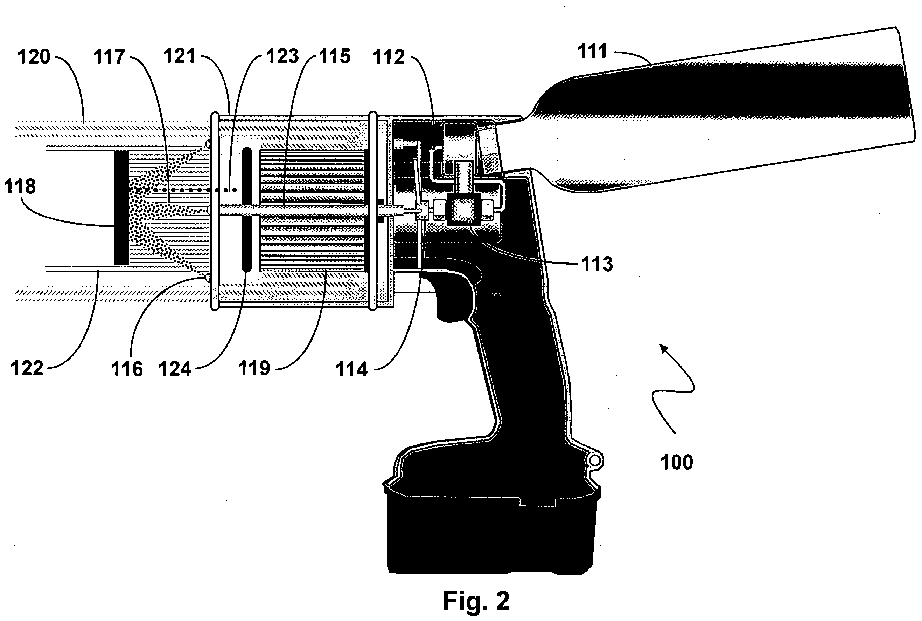

Referring now to Figure **2****,** shown is an example of a first embodiment of a trace particle collection system that may be used in connection with the particle removal system methods described herein. While various embodiments may differ in details, **Figure 2** shows basic features of the system described herein. The particle collection system **100** illustrated in Figure **2** is a handheld portable system, but the principles may be applied to larger, non-mobile systems. The particle removal portion of the system consists of a reservoir of liquid carbon dioxide **111,** a connection tube **112,** a pulsed valve **113,** an expansion chamber **114,** a connection tube **115** to a nozzle **116,** and a spray **117** of the aerosol mixture containing frozen carbon dioxide particles and pressurized gas against the target surface **118.** The particle transport portion of the system consists of an impeller fan **119** configured as a vortex attractor. The fan **119** blows an outward flowing stream of air **120** that is spinning about the axis of the impeller fan **119** and guided towards the target surface **118** by the surrounding housing **121.** An inward flowing stream of air **122** entrains the trace particles **123** and transports them to the collecting substrate **124.**

Although the embodiment illustrated in Figure **2** includes three nozzles **116** and connection tubes **115** that are joined to a single expansion chamber **114,** an embodiment of a particle removal component may include a varying number of these components but providing at least two nozzles for dispensing the aerosol mixture. The at least two nozzles **116** may be aimed to focus their aerosol mixture sprays **117** at a common point, as shown in Figure 2. This focal point may be located a short distance beyond the target surface **118.** When configured in this manner, the aerosol mixture sprays **117** interact with one another and the target surface **118** and reflect a substantial portion of the aerosol mixture spray **117** back towards the collection substrate **124.** If only one nozzle **116** were employed, the interaction of the aerosol mixture spray **117** and the target surface **118** could cause the spray **117** to spread radially outward parallel to the target surface **118,** rather than towards the collection substrate **124.**

The aerosol particles may be frozen carbon dioxide. The frozen carbon dioxide aerosol particles may sublime at ambient temperature. The release of liquid carbon dioxide from the pulsed valve **113** into the expansion chamber **114** allows a first portion of the liquid to absorb energy and become gaseous carbon dioxide and a second portion of the liquid to release energy and freeze into small particles of frozen carbon dioxide, thus forming the aerosol mixture spray **117.**

The frozen carbon dioxide aerosol mixture **117** may be selected to provide no significant damage to the target surface. For example, a semiconductor wafer with a circuit device pattern can generally be sprayed without damage to the circuit. The carbon dioxide aerosol mixture **117** is an oxide and has no flashpoint, which may be noted as an important characteristic when working with finely divided materials. The carbon dioxide aerosol mixture spray **117** contains carbon dioxide gas, which displaces oxygen and does not support flames. The carbon dioxide aerosol mixture **117** may be non-toxic and harmless to humans and animals, as long as not directed into the eyes. The frozen carbon dioxide aerosol mixture **117** may be pulsed to avoid excessive emissions into a confined space, since the carbon dioxide gas residue may displace the oxygen in air.

The embodiments of the aerosol generator illustrated in connection with Figures 2 through 4 include a source of pressurized gas to blow the aerosol particle spray towards a target surface that may be contaminated with traces of target chemicals, such as narcotics or explosives. The source of pressurized gas may be operated continuously or may be pulsed. A typical pulse may be between 0.01 seconds and 1 second so that gas and aerosol particles are delivered in accordance with the pulse timing.

Besides the carbon dioxide gas provided by the expansion chamber **114,** optionally an additional source of pressurized gas may be combined to act as an accelerant, to isolate the frozen carbon dioxide particles from the ambient warm air and thus sublime at a slower rate, or to enable the aerosol mixture spray to propagate to a greater distance from the nozzle. The optional additional source of pressurized gas may be combined with the carbon dioxide aerosol mixture in the expansion chamber **114,** or it may be provided coaxially surrounding and directed substantially parallel with and in the direction of the flow from the nozzle **116** orifice. The pressure of the optional pressurized gas may be less than 120 pounds per square inch, a value easily obtained with small compressors. Significantly higher or lower pressures may also be utilized in accordance with the availability, cost, and safety restrictions for the pressurized gas. For example, a high pressure tank of gas may not be acceptable in a public area due to the risk of explosion caused by mishandling. An embodiment may use any one of a variety of different gases including, for example, air, nitrogen, argon, and carbon dioxide. An embodiment may also utilize one or more of the foregoing in a combination alone, or with one or more other gases.

The nozzles **116, 216,** and **316** of Figures 2 through 4 provide for guiding the mixture of aerosol particles and blowing gas towards a point on a target surface such that this point is the object of the particle transport component of the particle removal system, described in more detail in following paragraphs.

The frozen carbon dioxide aerosol particles may impact the target particles on a target surface and provide sufficient momentum transfer to dislodge the target particles from the target surface and become entrained in the accompanying puff of carbon dioxide gas transporting the aerosol particles. The dislodged target particles and aerosol particles may then be collected by the particle transport component. The frozen carbon dioxide aerosol mixture may release target particles by at least one of: physical impact between the aerosol particle and the target particle, sudden sublimation producing a local pulse of gas when the aerosol particle contacts a surface at room temperature, the pulse of pressurized gas accompanying the aerosol mixture, and cooling the target particle such that its adhesion properties are changed.

The collecting substrate **124** may be any one of a variety of different materials and may vary in accordance with whether an embodiment electrically charges the collecting medium **124.** The collecting medium may be a filter. The collecting medium may include one or more of the following: a chemically coated adsorbing surface, a metal mesh, a three dimensional woven metal, a metal wire, a metal foil, a metal and electrical insulator laminate, and/or or a resistive coating on a substrate. Examples of non-electrically conducting collecting media include materials fabricated from cotton, paper, aramids, polyimides, fluorocarbons, and silica. Examples of metals and metal coatings include stainless steel, aluminum, titanium, nickel, chromium, silver, carbon, platinum, and gold.

The particle collection component may be any of a variety utilized in connection with particle collecting techniques. Examples include, but are not limited to, a mesh filter, a woven three dimensional mesh, a filter made of commonly utilized filter materials, an absorbent surface that may be chemically coated to enhance adhesion, a vortex particle separator, an electrostatic particle collector, and an engineered material with finely etched openings to pass air or another gas, but which also is capable or retaining particles.

In an embodiment, the particle transport component may be, for example, a simple vacuum suction flow into a nozzle or a vacuum suction flow into a nozzle that is bounded circumferentially by a spinning vortex. The aerosol particles and dislodged target particles may be swept into the vacuum suction flow and may then be transported to a particle collecting medium associated with the particle removal system.

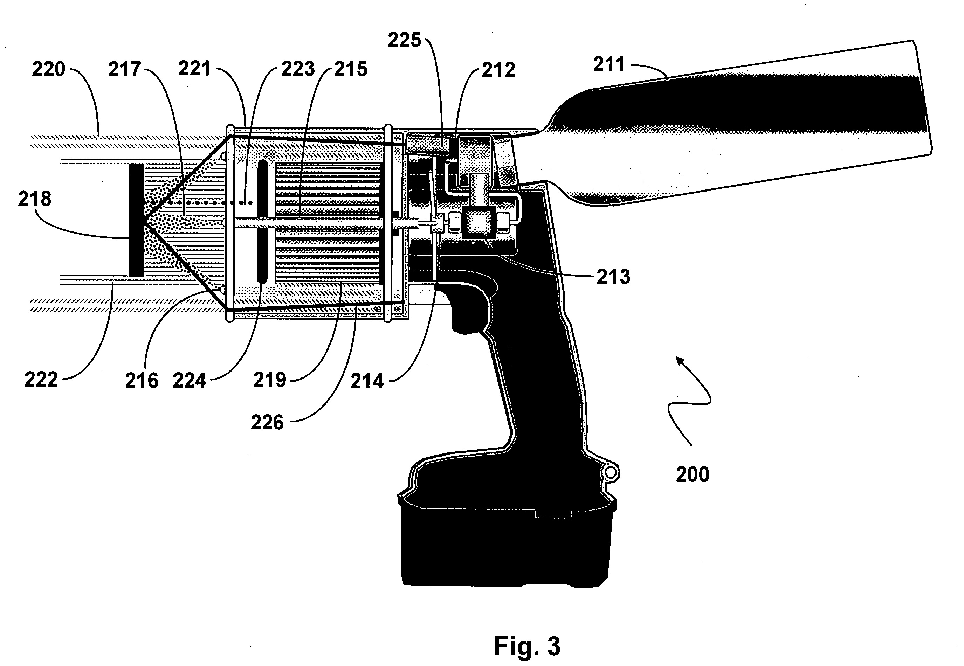

Referring now to Figure **3****,** shown is an example of an embodiment of the invention which provides for a trace particle collection system that may be used in connection with the particle removal system methods described herein. While various embodiments may differ in details, Figure **3** shows basic features of the system described herein. The particle collection system **200** illustrated in Figure **3** is a handheld portable system, but the principles may be applied to larger, non-mobile systems. The particle removal portion of the system consists of a reservoir of liquid carbon dioxide **211,** a connection tube **212,** a pulsed valve **213,** an expansion chamber **214,** a connection tube **215** to a nozzle **216,** and a spray **217** of the aerosol mixture containing frozen carbon dioxide particles and pressurized carbon dioxide gas against the target surface **218.** The particle transport portion of the system consists of an impeller fan **219** configured as a vortex attractor. The fan **219** blows an outward flowing stream of air **220** that is spinning about the axis of the impeller fan **219** and guided towards the target surface **218** by the surrounding housing **221.** An inward flowing stream of air **222** entrains the trace particles **223** and transports them to the collecting substrate **224.**

Figure **3** further illustrates the use of an aid provided to the operator for determining the optimal distance of the trace particle collection system from the target surface **218.** In this embodiment, two solid state lasers **225** have their beams oriented to converge to a common focal point when the target surface **218** is at the correct distance. Other possible embodiments may utilize an ultrasonic distance detector or an optical reflection sensor. These other possible embodiments require a means to inform the operator when the optimal distance has been achieved. The means may be in visual form, such as an illuminated indicator, audible form, such as a distinctive sound, or in tactile form, such as a vibrator.

It should be noted that the optimal distance indicator may be any one of a variety of different types of sensors in accordance with the particular application using the techniques described herein and/or described in patents and/or pending patent applications that are incorporated by reference herein.

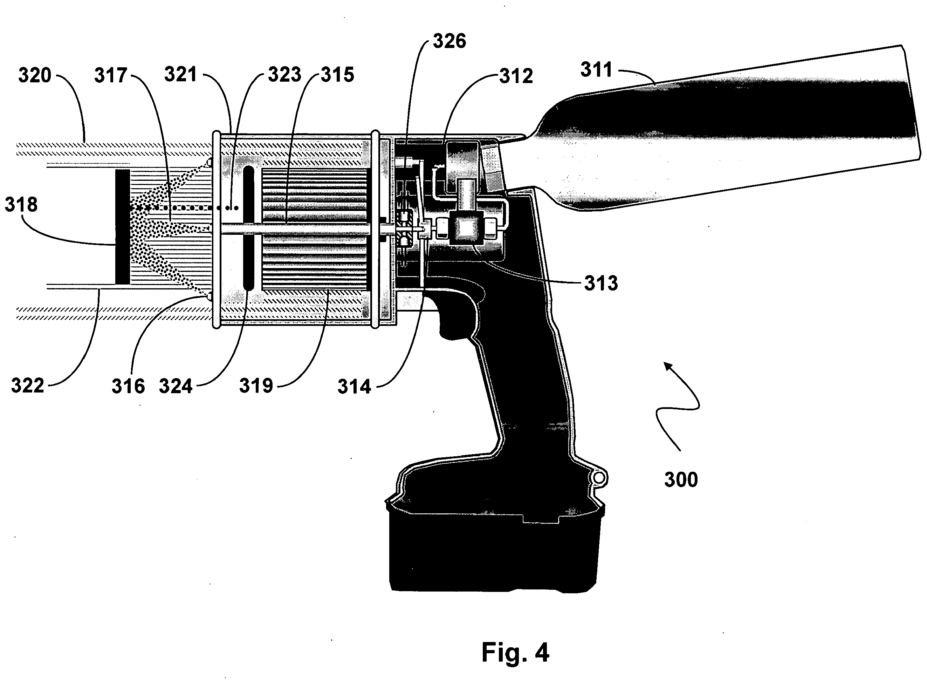

Referring now to Figure **4****,** shown is an example of a third embodiment of a trace particle collection system that may be used in connection with the particle removal system methods described herein. While various embodiments may differ in details, Figure **4** shows basic features of the system described herein. The particle collection system **300** illustrated in Figure **4** is a handheld portable system, but the principles may be applied to larger, non-mobile systems. The particle removal portion of the system consists of a reservoir of liquid carbon dioxide **311,** a connection tube **312,** a pulsed valve **313,** an expansion chamber **314,** a connection tube **315** to a nozzle **316,** and a spray **317** of the aerosol mixture containing frozen carbon dioxide particles and pressurized carbon dioxide gas against the target surface **318.** The particle transport portion of the system consists of an impeller fan **319** configured as a vortex attractor. The fan **319** blows an outward flowing stream of air **320** that is spinning about the axis of the impeller fan **319** and guided towards the target surface **318** by the surrounding housing **321.** An inward flowing stream of air **322** entrains the trace particles **323** and transports them to the collecting substrate **324.**

Figure **4** further illustrates the use of a liquid carbon dioxide sensor to provide information to the operator when the liquid carbon dioxide has expired and the carbon dioxide aerosol mixture is no longer being produced. In this embodiment, an optical transmission sensor **326** is employed on a connection tube **315.** The optical transmission sensor **326** views the contents of the connection tube **315** through a transparent section of the connection tube **315.** If only carbon dioxide gas is entering the connection tube **315,** the contents will be optically transparent and provide a first signal level. If the tube contains a carbon dioxide aerosol mixture, the contents will be optically reflective and provide a second signal level.

Other possible embodiments for providing a liquid carbon dioxide sensor may be provided. For example, a temperature sensor may be mounted on a nozzle to sense the cold temperature resulting from the frozen carbon dioxide, an optical reflection sensor may view the difference in reflectivity of carbon dioxide gas versus the carbon dioxide aerosol mixture, and an ultrasonic sensor may be used to sense the presence of higher density of the carbon dioxide liquid compared to carbon dioxide gas.

All of the possible embodiments for providing a liquid carbon dioxide sensor require a means to inform the operator when the liquid carbon dioxide has expired. The means may be in visual form, such as an illuminated indicator, audible form, such as a distinctive sound, or in tactile form, such as a vibrator.

## Claims

1. A handheld portable apparatus (100, 200, 300) for dislodging and collecting target particles from a target surface (118, 218, 318), the apparatus comprising:
a reservoir (111, 211, 311) of liquefied and pressurized carbon dioxide;
at least one pulsed valve (113, 213, 313) in communication with said reservoir (111, 211, 311);
at least one expansion chamber (114, 214, 314) in communication with said at least one pulsed valve (113, 213, 313) for forming an aerosol mixture of frozen carbon dioxide particles and carbon dioxide gas;
at least two nozzles (116, 216, 316) in communication with said at least one expansion chamber (114, 214, 314) for directing a spray of said aerosol mixture to overlap at a single focal point downstream of said at least two nozzles (116, 216, 316);
a particle transport component (119, 219, 319) providing a suction flow into an orifice that entrains particles from said aerosol mixture and target particles dislodged by an impact of said particles from said aerosol mixture;
a collecting medium (124, 224, 324) for accumulating said particles entrained in said suction flow; and
means (225, 226) to assist the operator to position the handheld portable apparatus at an optimal distance from the target surface (118, 218, 318), wherein the optimal distance is based on the single focal point of the aerosol mixture sprays from the at least two nozzles (116, 216, 316) being located beyond the target surface (118, 218, 318).

2. The apparatus of Claim 1, wherein said suction flow into an orifice is surrounded circumferentially by a spinning vortex flow.

3. The apparatus of Claim 1, wherein said expansion chamber (114, 214, 314) includes an entrance orifice that has a smaller cross section than the exit orifice.

4. The apparatus of Claim 1, wherein the collecting medium (124, 224, 324) includes at least one of a filter, chemically coated adsorbing surface, metal mesh, three dimensional woven metal, metal wire, metal foil, metal and electrical insulator laminate, or a resistive coating on a substrate,

5. The apparatus of Claim 1, wherein the collecting medium (124, 224, 324) is disposed either upstream of said orifice or within said orifice.

6. The apparatus of Claim 1, wherein said reservoir (111, 211, 311) is a pressurized container of liquefied carbon dioxide gas that forms an aerosol mixture when it is converted in part to solid particles of frozen carbon dioxide and in part to carbon dioxide gas upon expansion into atmospheric pressure in the expansion chamber (114, 214, 314).

7. The apparatus of Claim 6, wherein said aerosol mixture is delivered in pulses at predetermined time intervals, and said aerosol particles are delivered in accordance with delivery of said pressurized gas.

8. The apparatus of Claim 7, wherein said valve (113, 213, 313) provides pulses of liquid carbon dioxide greater than 10 milliseconds and less than 1 second in duration.

9. The apparatus of Claim 1, wherein said particle transport component (119, 219, 319) includes an impeller configured as a vortex attractor.

10. The apparatus of Claim 1, further including a second supply of pressurized gas to assist the transport of said aerosol mixture.

11. The apparatus of Claim 10, wherein said second supply of pressurized gas is delivered by at least one of: addition into said expansion chamber, addition coaxial with and in the direction of the flow from said nozzle for said aerosol mixture and wherein said second supply of pressurized gas is at least one of: air, nitrogen, argon, carbon dioxide.

12. The apparatus of Claim 1, wherein said means (225, 226) to position the apparatus is at least one of: an ultrasonic distance detector, at least two solid state laser pointers, or an optical reflection sensor.

13. The apparatus of Claim 1, further including means (326) to determine if the flow of carbon dioxide liquid is sufficient for collecting target particles.

14. The apparatus of Claim 13, wherein said means (326) to determine liquid flow is at least one of: temperature sensor mounted on a nozzle, optical reflection sensor viewing the reflectivity of the aerosol mixture, optical transmission sensor viewing the opacity of the aerosol mixture, ultrasonic sensor to sense the density of the carbon dioxide liquid or gas.

## Patentansprüche

1. Tragbares Handgerät (100, 200, 300) zur Verschiebung und Sammlung von Zielpartikeln aus einer Zielfläche (118, 218, 318), wobei das Gerät aufweist:
ein Reservoir (111, 211, 311) von verflüssigtem und unter Druck gesetztem Kohlendioxid;
mindestens ein Impulsventil (113, 213, 313) in Verbindung mit dem Reservoir (111, 211, 311);
mindestens eine Expansionskammer (114, 214, 314) in Verbindung mit dem mindestens einen Impulsventil (113, 213, 313) zur Bildung eines Aerosolgemisches aus gefrorenen Kohlendioxidpartikeln und Kohlendioxidgas;
mindestens zwei Sprühdüsen (116, 216, 316) in Verbindung mit der mindestens einen Expansionskammer (114, 214, 314) zur Ausrichtung eines Sprays von dem Aerosolgemisch, um an einem einzigen Fokalpunkt stromabwärts der mindestens zwei Sprühdüsen (116, 216, 316) zu überlappen;
ein Partikeltransportteil (119, 219, 319), das einen Saugstrom in eine Öffnung bereitstellt, der Partikel aus dem Aerosolgemisch und Zielpartikel, die durch einen Aufprall der Partikeln aus dem Aerosolgemisch verschoben sind, mitnimmt;
ein Sammelmedium (124, 224, 324) zur Ansammlung der Partikel, die in dem Saugstrom mitgenommen sind; und
Mittel (225, 226) zum Unterstützen des Bedieners bei der Positionierung des tragbaren Handgerätes in einem optimalen Abstand von der Zielfläche (118, 218, 318), wobei der optimale Abstand auf dem einzigen Fokalpunkt des Aerosolgemischsprays von den mindestens zwei Sprühdüsen (116, 216, 316), die über die Zielfläche (118, 218, 318) hinaus angeordnet sind, basiert.

2. Gerät nach Anspruch 1, wobei der Saugstrom in eine Öffnung von einer drehenden Wirbelströmung umlaufend umgeben ist.

3. Gerät nach Anspruch 1, wobei die Expansionskammer (114, 214, 314) eine Eintrittsöffnung umfasst, die einen kleineren Durchschnitt als die Ausgangsöffnung aufweist.

4. Gerät nach Anspruch 1, wobei das Sammelmedium (124, 224, 324) wenigstens eines von einer chemisch beschichteten, adsorbierenden Fläche, einem Metallgitter, einem dreidimensionalen, gewebten Metall, einem Metalldraht, einer Metallfolie, einem Laminat aus einem Metall und einem elektrischen Isolator, oder einer resistiven Beschichtung auf einem Substrat umfasst.

5. Gerät nach Anspruch 1, wobei das Sammelmedium (124, 224, 324) entweder stromaufwärts der Öffnung oder innerhalb der Öffnung angeordnet ist.

6. Gerät nach Anspruch 1, wobei das Reservoir (111, 211, 311) als ein unter Druck gesetzter Behälter von verflüssigtem Kohlendioxidgas ausgebildet ist, das ein Aerosolgemisch bildet, wenn es beim Expandieren in dem atmosphärischen Druck in die Expansionskammer (114, 214, 314) teilweise in Feststoffpartikel aus gefrorenem Kohlendioxid und teilweise in Kohlendioxidgas umgewandelt wird.

7. Gerät nach Anspruch 6, wobei das Aerosolgemisch impulsweise in vorbestimmten Zeitabständen abgegeben wird, und das Aerosolgemisch im Einklang mit der Abgabe des unter Druck gesetzten Gas abgegeben wird.

8. Gerät nach Anspruch 7, wobei das Ventil (113, 213, 313) Impulse von verflüssigtem Kohlendioxid liefert, die zeitlich größer als 10 Millisekunden und kleiner als 1 Sekunde sind.

9. Gerät nach Anspruch 1, wobei das Partikeltransportteil (119, 219, 319) ein Laufrad umfasst, das als Vortex-Attraktor konfiguriert ist.

10. Gerät nach Anspruch 1, das weiterhin eine zweite Versorgung von unter Druck gesetztem Gas umfasst, um den Transport des Aerosolgemisches zu unterstützen.

11. Gerät nach Anspruch 10,
wobei die zweite Versorgung von unter Druck gesetztem Gas zugeführt wird durch wenigstens eines von: einer Ergänzung der Expansionskammer, einer Ergänzung, die koaxial mit und in Richtung des Stromes aus der Sprühdüse für das Aerosolgemisch angeordnet ist, und
wobei die zweite Versorgung von unter Druck gesetztem Gas wenigstens eines von Luft, Wasserstoff, Argon, Kohlendioxid ist

12. Gerät nach Anspruch 1, wobei die Mittel (225, 226) zur Positionierung des Geräts wenigstens eines von einem Ultraschalldistanzmesser, wenigstens zwei Festkörperlaserpointern, oder einem optischen Reflexionssensor sind

13. Gerät nach Anspruch 1, das weiterhin Mittel (326) zum Bestimmen, ob der Strom von verflüssigtem Kohlendioxid ausreichend ist, um die Zielpartikeln zu sammeln, umfasst.

14. Gerät nach Anspruch 13, wobei die Mittel (326) zum Bestimmen des Flüssigkeitsstroms wenigstens eines der folgenden umfassen: einen Temperatursensor, der an einer Sprühdüse montiert ist, einen optischen Reflexionssensor, der die Reflexivität des Aerosolgemisches prüft, einen optischen Übertragungssensor, der die Trübheit des Aerosolgemisches prüft, einen Ultraschallsensor zum Fühlen der Dichte des verflüssigten oder gasförmigen Kohlendioxids.

## Revendications

1. Dispositif portatif de poche (100, 200, 300) conçu pour déloger et collecter des particules cibles à partir d'une surface cible (118, 218, 318), le dispositif comprenant:
un réservoir (111, 211, 311) de dioxyde de carbone liquéfié et sous pression;
au moins une soupape à impulsions (113, 213, 313) en communication avec le réservoir (111, 211, 311);
au moins une chambre de dilatation (114, 214, 314) en communication avec la ou les soupapes à impulsions (113, 213, 313) pour former un mélange aérosol de particules de dioxyde de carbone gelées et de carbone de dioxyde gazeux;
au moins deux buses (116, 216, 316) en communication avec la ou les chambres de dilatation (114, 214, 314) pour diriger un jet du mélange aérosol afin de se recouper en un point focal unique situé en aval des deux buses ou plus (116, 216, 316);
un élément de transport de particules (119, 219, 319) fournissant un courant d'aspiration dans un orifice qui entraîne des particules du mélange aérosol et des particules cibles délogées par un impact des particules du mélange aérosol;
un milieu de collecte (124, 224, 324) destiné à accumuler les particules entraînées dans la courant d'aspiration; et
des moyens (225, 226) pour aider l'opérateur à positionner le dispositif portatif de poche à une distance optimale de la surface cible (118, 281, 318), dans lesquels la distance optimale est basée sur un point focal unique des jets du mélange aérosol venant des deux buses ou plus (116, 216, 316) qui sont situées au-delà de la surface cible (118, 218, 318).

2. Dispositif selon la revendication 1, dans lequel le courant d'aspiration dans un orifice est entouré de manière circonférentielle par un écoulement tourbillonnaire qui tourne.

3. Dispositif selon la revendication 1, dans lequel la chambre de dilatation (114, 214, 314) comprend un orifice d'entrée qui a une section transversale plus petite que l'orifice de sortie.

4. Dispositif selon la revendication 1, dans lequel le milieu de collecte (124, 224, 324) comprend au moins un des éléments suivants : un filtre, une surface adsorbante revêtue chimiquement, un treillis métallique, du métal tissé en trois dimensions, un fil métallique, une feuille métallique, un ensemble multicouche de métal et d'isolant électrique, ou un revêtement résistif sur un substrat.

5. Dispositif selon la revendication 1, dans lequel le milieu de collecte (124, 224, 324) est situé soit en amont de l'orifice soit à l'intérieur de l'orifice.

6. Dispositif selon la revendication 1, dans lequel le réservoir (111, 211, 311) est un conteneur sous pression de gaz carbonique liquéfié qui forme un mélange aérosol quand il est converti en partie en particules solides de dioxyde carbone gelé et en partie en dioxyde de carbone gazeux lors de la dilatation à la pression atmosphérique dans la chambre de dilatation (114, 214, 314).

7. Dispositif selon la revendication 6, dans lequel le mélange aérosol est délivré par impulsions à intervalles de temps prédéterminés, et les particules aérosol sont délivrées selon la distribution du gaz sous pression.

8. Dispositif selon la revendication 7, dans lequel la soupape (113, 213, 313) fournit des impulsions de dioxyde de carbone liquéfié supérieures à 10 millisecondes et inférieures à 1 seconde en durée.

9. Dispositif selon la revendication 1, dans lequel l'élément de transport de particules (119, 219, 319) comprend une turbine utilisée comme attracteur de tourbillons.

10. Dispositif selon la revendication 1, comprenant en outre une seconde alimentation en gaz sous pression pour faciliter le transport du mélange aérosol.

11. Dispositif selon la revendication 10, dans lequel la seconde alimentation en gaz sous pression est délivrée par au moins un des éléments suivants : un ajout à la chambre de dilatation, un ajout coaxial avec la buse et situé dans la direction du courant venant de la buse pour le mélange aérosol et dans lequel la seconde alimentation en gaz sous pression est choisie parmi au moins un des éléments suivants : air, azote, argon, dioxyde de carbone.

12. Dispositif selon la revendication 1, dans lequel les moyens (225, 226) pour positionner le dispositif sont choisis parmi au moins un des éléments suivants : un détecteur de distance ultrasonique, au moins deux pointeurs laser à solide, ou un capteur de réflexion optique.

13. Dispositif selon la revendication 1, comprenant en outre des moyens (326) pour déterminer si le débit de dioxyde de carbone liquide est suffisant pour collecter les particules cibles.

14. Dispositif selon la revendication 13, dans lequel les moyens (326) pour déterminer le débit de liquide sont choisis parmi au moins un des éléments suivants : un capteur de température monté sur une buse, un capteur de réflexion optique visualisant la réflectivité du mélange aérosol, un capteur de transmission optique visualisant l'opacité du mélange aérosol, un capteur ultrasonique pour mesurer la densité du dioxyde de carbone liquide ou gazeux.
